# EUROPEAN PATENT SPECIFICATION

(11) **EP 4 067 117 B1**
(45) Date of publication and mention of the grant of the patent: **25.09.2024**
(21) Application number: 20893091.7
(22) Date of filing: 26.11.2020
(51) Int. Cl.: B60C 11/03, B60C 11/12, B60C 11/13, B60C 15/06

(54) **TIRE**
REIFEN
PNEUMATIQUE

(30) Priority: 29.11.2019 JP 2019216891
(43) Date of publication of application: 05.10.2022
(73) Proprietor: BRIDGESTONE CORPORATION, Chuo-ku Tokyo 104-8340 (JP)
(72) Inventor: ISHIHARA, Nobuyuki, Chuo-ku, Tokyo 104-8340 (JP)
(74) Representative: Marks & Clerk LLP
(86) International application number: PCT/JP2020/043928
(87) International publication number: WO 2021/106976

(56) References cited:
- WO-A1-2012/176766
- JP-A- 2010 260 471
- JP-A- 2014 094 600
- JP-A- 2014 094 601
- JP-A- 2014 177 237
- JP-A- 2016 137 763
- JP-A- 2019 137 088
- JP-A- 2019 156 177
- JP-A- H 026 203
- JP-A- H03 193 508
- JP-A- H06 278 413
- KR-A- 20150 073 535
- US-A1- 2019 023 079

## Description

### TECHNICAL FIELD

The present invention relates to a tire with improved driving performance on ice and on snow, while reducing rolling resistance.

### BACKGROUND ART

Patent Document 1 describes a tire having a plurality of straight circumferential grooves and a plurality of lateral grooves are formed in a tread section, a shoulder land region is partitioned into a plurality of shoulder blocks, and a three-dimensional sipe is formed in the shoulder blocks. According to such tire, driving performance on ice and on snow may be improved. Attention is also drawn to the disclosures of JP6-278413A, JP2019-156177A, JP2010-260471A, JP2016-137763A, JP2014-177237A, US2019/023079A1, JP2014-094600A, JP2014-094601A and JP2019-137088A.

### CITATION LIST

### PATENT LITERATURE

Patent Literature 1: Japanese Unexamined Patent Application Publication No. 2014 -177237

### SUMMARY OF INVENTION

However, in the conventional tire, a drainage from the sipe to a circumferential main groove, which mainly handles the drainage of a ground surface, on an icy road surface may be suppressed by a water flow flowing in the circumferential main groove. Therefore, in the conventional tire, the drainage by the sipe in the tread surface may be insufficient, and further improvement in the drainage performance is desired.

Moreover, a block, partitioned by a plurality of the circumferential main grooves and the plurality of lateral grooves formed in the tread section, is desired to reduce rolling resistance further by suppressing deformation due to contact pressure of the tire.

An object of the present invention is to provide a tire that may improve on-ice driving performance by improving drainage from a sipe to a circumferential main groove while reducing rolling resistance of the tire.

A tire according to the present invention is provided as claimed in claim 1.

According to the above-described configuration, a tire that may improve on-ice driving performance by improving drainage from a sipe to a circumferential main groove while reducing rolling resistance of the tire is provided.

### BRIEF DESCRIPTION OF DRAWINGS

FIG. 1 is a partial plan view illustrating a tread pattern of a tread section 10.
FIG. 2 is a partial enlarged plan view of a shoulder land region SR including a circumferential main groove 20.
FIG. 3(a) is an enlarged perspective view of a portion of one groove wall 31 that forms a shoulder lateral groove 30 and includes an inclined surface 32.
FIG. 3(b) is an enlarged end view perpendicular to a tire axial direction TA, which illustrates a part of the inclined surface 32 of the groove wall 31 at a tire widthwise-inner position.
FIG. 3(c) is an enlarged end view perpendicular to the tire axial direction TA, which illustrates a part of the inclined surface 32 of the groove wall 31 at a tire widthwise-outer position.
FIG. 4(a) is an enlarged perspective view of a portion of a groove wall 31 according to a variant, the portion including an inclined surface 32A.
FIGS. 4(b) to 4(c) are enlarged end views perpendicular to the tire axial direction TA, each of which illustrates a part including the inclined surface 32A of the groove wall 31 according to the variant.

### DESCRIPTION OF EMBODIMENTS

Embodiments will be described below with reference to the drawings. It should be noted that the same functions and configurations are denoted by the same or similar reference numerals, and the description thereof is appropriately omitted.

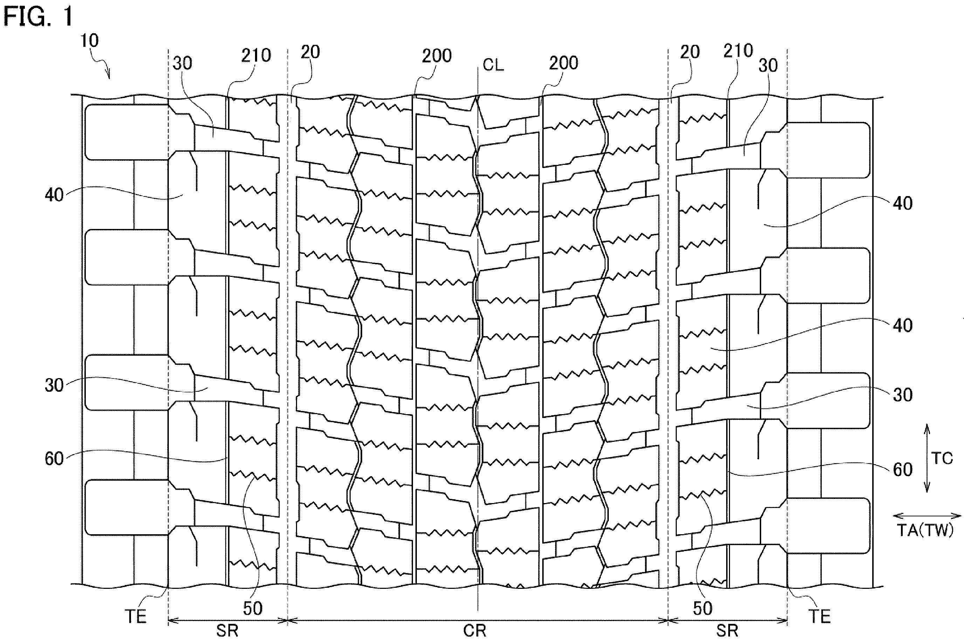

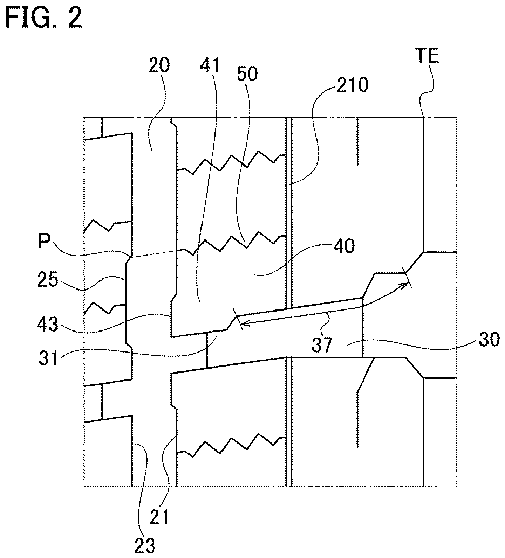

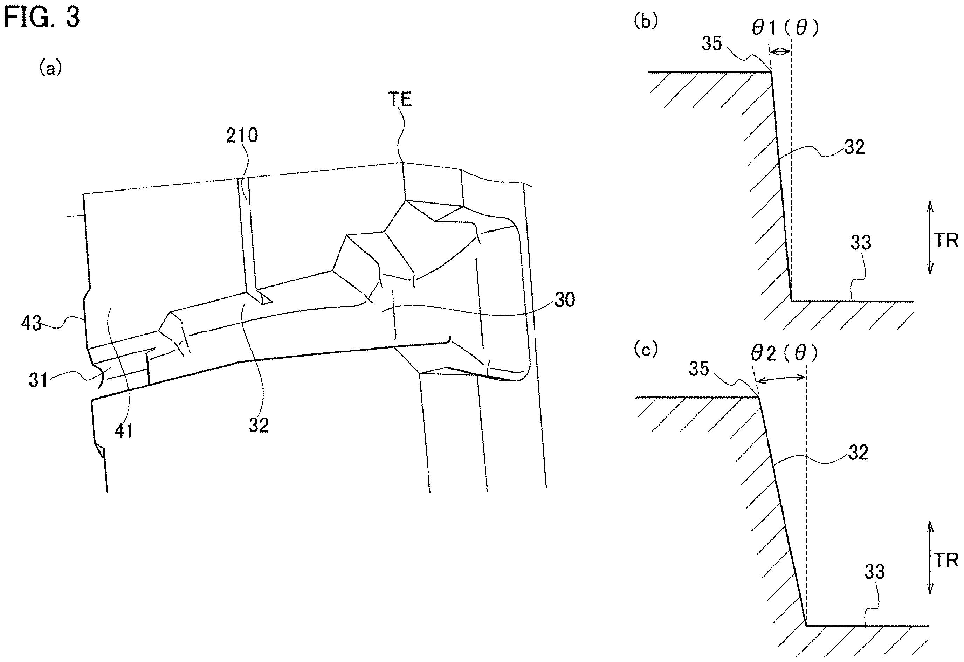

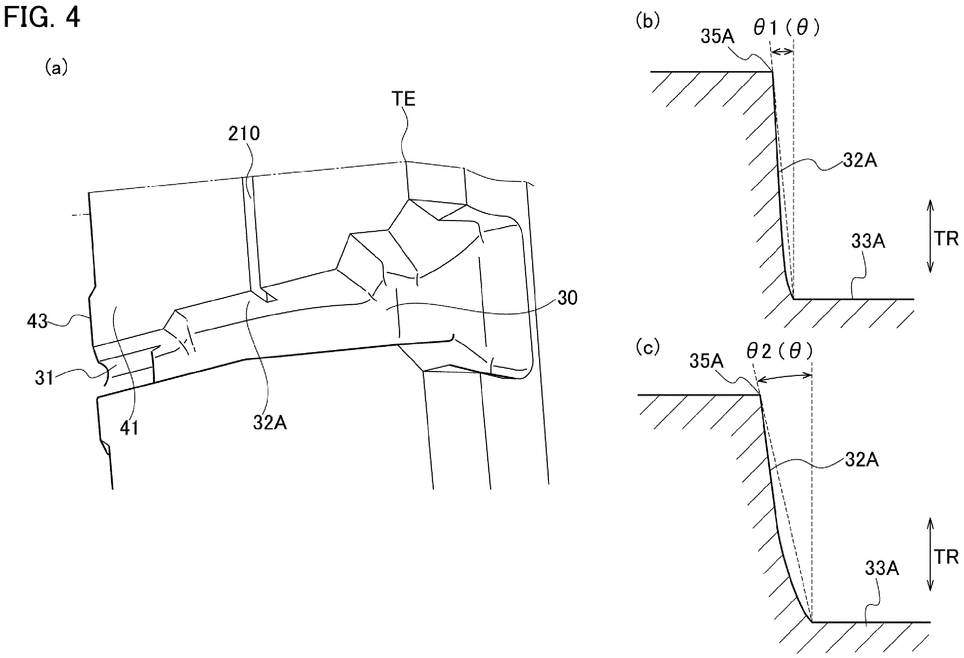

FIG. 1 is a partial plan view illustrating a tread pattern of a tread section 10 of a tire according to present embodiment. FIG. 2 is a partial enlarged plan view of a shoulder land region SR including a circumferential main groove 20. FIG. 3(a) is an enlarged perspective view of a part including an inclined surface 32 of one groove wall 31 forming a shoulder lateral groove 30. FIG. 3(b) is an enlarged end view perpendicular to a tire axial direction TA, which illustrates a part of the inclined surface 32 of the groove wall 31 at the tire-widthwise-inner position. FIG. 3(c) is an enlarged end view perpendicular to the tire axial direction TA, which illustrates a part of the inclined surface 32 of the groove wall 31 at a tire-widthwise-outer position. FIG. 4(a) is an enlarged perspective view of a part of a groove wall 31 according to a variant, the part including an inclined surface 32A. FIGS. 4(b) to 4(c) are enlarged end views perpendicular to the tire axial direction TA, each of which illustrates a part including the inclined surface 32A of the groove wall 31 according to the variant.

The tread section 10 is formed with a tread pattern in accordance with a performance required for the tire. In this embodiment, the tire is a studless tire that can be suitably used for trucks and buses (TB). The studless tire may be referred to as a snow tire or a winter tire. Alternatively, the tire may be a so-called all-season tire usable not only in winter but also in all seasons.

The tire is not necessarily used for a truck or a bus, but may be used for other types of vehicles, for example, a passenger automobile, a van, and a light-duty truck.

The tire according to the present embodiment includes a tread section 10 having a pair of circumferential main grooves 20 extending in the tire circumferential direction TC. The tread section 10 includes a center land region CR partitioned by the pair of circumferential main grooves 20, and a shoulder land region SR positioned outside a tire width direction TW of the center land region CR partitioned by one circumferential main groove 20 of the pair of circumferential main grooves 20 and a tread end TE. The center land region CR forms a dense structure in which no main groove extending along the tire circumferential direction TC is formed. The shoulder land region SR includes a block 40 partitioned by a plurality of shoulder lateral grooves 30 crossing the shoulder land region SR in the tire width direction TW. A sipe 50 extending in the tire width direction TW and having one end communicating with the circumferential main groove 20 is formed in the block 40. On a corner part 41 of the block 40 at an intersection of the one circumferential main groove 20 and a first shoulder lateral groove 30, a first groove wall 21 of the one circumferential main groove 20 is provided with a projection 43 projecting inward in the tire width direction TW. The first shoulder lateral groove 30 is a width direction groove included in the plurality of shoulder lateral grooves 30. The configuration of the tire according to the present embodiment will be described in detail below.

As illustrated in FIG. 1, the pair of circumferential main grooves 20 extending along the tire circumferential direction TC is formed in the tread section 10. In this embodiment, the pair of circumferential main grooves 20 are straightly formed. However, the pair of circumferential main grooves 20 may not necessarily be straight, such as coasting slightly in the tire width direction.

The tread section 10 is partitioned into a center land region CR where the tire width direction TW of which is partitioned by the pair of circumferential main grooves 20, and a shoulder land region SR located outside in the tire width direction TW of the center land region CR and partitioned by one circumferential main groove 20 of the pair of circumferential main grooves 20 and a tread end TE.

In the present embodiment, a circumferential groove having a groove width equal to a groove width of the one circumferential main groove 20 or a groove width wider than the groove width of the one circumferential main groove 20 is not formed in the center land region CR.

In other words, only a circumferential narrow groove 200 extending in the tire circumferential direction and having a groove width narrower than the circumferential main groove 20 is formed in the center land region CR. Therefore, in the center land region CR, the distance between adjacent land blocks (which may be called spacing or gap) is narrow. Therefore, in the center land region CR, a plurality of land blocks are densely arranged to form a dense structure with respect to arrangement of land blocks in a general tire of this type.

In the present embodiment, the groove width of the one circumferential main groove 20 is about 4.0mm to 10.0mm, and the groove width of the circumferential narrow groove 200 is about 1.5mm to 4.0mm.

A shoulder lateral groove 30 crossing in the tire width direction TW from the circumferential main groove 20 to the tread end TE is formed in at least one shoulder land region SR. In this embodiment, a plurality of the shoulder lateral grooves 30 are formed in the shoulder land region SR. The shoulder land region SR is partitioned into a plurality of blocks 40 by the plurality of the shoulder lateral grooves 30.

A sipe 50 extending in the tire width direction TW and communicating with the circumferential main groove 20 is formed in each block 40 of the shoulder land region SR. Here, the sipe is a narrow groove formed to have a groove width (for example, a groove width of 0.1mm to 1.5mm), which is configured to close in the ground plane when the tire is grounded. In this embodiment, the sipe 50 is a so-called three-dimensional sipe that is bent a plurality of times.

As illustrated in FIG. 2, on a surface forming a first groove wall 21 of the circumferential main groove 20 in each block 40, a projection 43 projecting inner side in the tire width direction TW is formed at a corner part 41, where the circumferential main groove 20 intersects the shoulder lateral groove 30.

In the present embodiment, the three-dimensional sipe 50 is not formed at a tire circumferential position where the projection 43 of each block 40 is formed. It should be noted that a sipe may be formed on a block 40 at a tire circumferential position where the projection 43 is formed, if the sipe has an end part in tire width direction TW on the circumferential main groove 20 side not opened to the circumferential main groove 20 at the projection 43.

Each block 40 is formed to have a circumferential narrow groove 210 extending in the tire circumferential direction TC and having a groove width narrower than the groove width of the circumferential main groove 20. The groove width of the circumferential narrow groove 210 formed in the shoulder land region SR may be the same as the groove width of the circumferential narrow groove 200 formed in the center land region CR at an upper limit, and may be the same as the groove width of the sipe at a lower limit. Specifically, the groove width of the circumferential narrow groove 210 is 0.1mm to 4.0mm.

As illustrated in FIG. 2, an outer end of the three-dimensional sipe 50 in the tire width direction TW may communicate with the circumferential narrow groove 210. A groove depth of the circumferential narrow groove 210 may be shallower than a groove depth of the shoulder lateral groove 30 as illustrated in FIG. 3(a).

As illustrated in FIG. 2, a groove wall 31 on the shoulder lateral groove 30 side at the corner part 41 of the block 40 may be formed in protruding shape protruding in the tire circumferential direction TC, the corner part 43 being a part where the projection 43 is formed. That is, the corner part 41 of the block 40 including the protruding shape protruding in the tire circumferential direction TC may protrude toward inner side in the tire width direction TW (toward an tire equatorial line side) and toward the tire circumferential direction TC side at the groove walls of the circumferential main groove 20 and the shoulder lateral groove 30. In the present embodiment, only one groove wall of the shoulder lateral groove 30 is formed to include the protruding shape protruding in the tire circumferential direction TC.

As illustrated in FIG. 2, in the second groove wall 23 of the circumferential main groove 20, a recess 25 recessed in the tire width direction TW is formed at a position opposed to the tire circumferential position of the first groove wall 21 where the projection 43 is formed. The intersection P between the second groove wall 23 and an extension line of the three-dimensional sipe 50 extending in the tire width direction TW is located in the recess 25, including an end part in the tire circumferential direction TC of the recess 25. The extension line of the three-dimensional sipe 50 extending in the tire width direction TW is illustrated by a broken line in FIG. 2.

As illustrated in FIGS. 3(a) to 3(c), the groove wall 31 of the shoulder lateral groove 30, which partitions the shoulder land region SR into a plurality of blocks 40, includes an inclined surface 32 with curved shape. In the cross section perpendicular to the tire axial direction, the inclination angle θ of the inclined surface 32, which has curved shape, with respect to the tire radial direction TR gradually increases from the inner side in the tire width direction TW to the outer side in the tire width direction TW. The inclination angle θ of the inclined surface 32 is an inclination angle from the groove bottom 33 to the tread surface 35.

For example, the inclination angle θ1 at the inner end of the curved inclined surface 32 in the tire width direction TW illustrated in FIG. 3(b) is 5° to 10°. The inclination angle θ2 at the outer end of the curved inclined surface 32 in the tire width direction TW illustrated in FIG. 3(c) is 5° to 20°. However, the inclination angle θ of the curved inclined surface 32 is selected in a range satisfying a condition that the inclination angle θ is gradually increased from the inclination angle θ1 at the inner end in the tire width direction TW to the inclination angle θ2 at the outer end in the tire width direction TW.

Although the contents of the present invention have been described in accordance with embodiments, it will be apparent to those skilled in the art that the present invention is not limited to these descriptions but is defined by the appended claims.

In the end surface perpendicular to the tire axial direction illustrated in FIGS. 3(b) and 3(c) of the present embodiment, the inclined surface 32 is inclined linearly from the groove bottom 33 of the groove wall 31 to the surface 35 of the tread section 10. However, the inclined surface 32 with curved shape is not limited to the embodiment illustrated in FIGS. 3(a) to 3(c) as long as the surface from the groove bottom 33 to the surface 35 of the tread section 10 is inclined. For example, as in a variant illustrated in FIGS. 4(a) to 4(c), an inclined surface 32A with curved shape may have an end face, the end face perpendicular to the tire axial direction, inclined from a groove bottom 33A of the groove wall 31 to a tread surface 35A and curved to be convex downward, as illustrated in FIGS. 4(b) and 4(c).

Further, as illustrated in FIG. 1, the tread pattern formed on the tread section 10 of the tire according to the present embodiment has a pattern in which the tire rotation direction is designated so that the effect is remarkably exhibited during driving. However, the tread pattern is not limited to this. For example, in a case where it is desirable to have a structure that exhibits the effect in a good balance between driving and braking, a pattern inverted at the tire equatorial line CL may be used.

A rubber used for the tread section 10 may be made of an appropriate material in consideration of on-snow driving performance and wear resistance, and is not particularly limited. However, a material that may contribute to a reduction of rolling resistance (RR) of the tire may be used. Specifically, the rolling resistance coefficient (RRC) is preferably 7.5 or less.

### (Action/Effect)

In this embodiment, as illustrated in FIG. 1, a dense structure, in which a plurality of land blocks are densely arranged in the center land region CR, is formed. This structure is a structure in which the center land region CR is partitioned by the circumferential narrow grooves 200. Therefore, the blocks or ribs partitioned by the circumferential narrow grooves 200 support each other along the tire width direction TW during deformation, and deformation of the blocks or ribs in the tire width direction TW is suppressed. Therefore, uneven wear resistance in the center land region CR can be improved. Further, the rolling resistance of the tire can be reduced.

When the center land region CR has the dense structure, in which a plurality of land blocks are densely arranged, deformation of the center land region CR in the tire width direction TW is suppressed. As a result, the ground pressure in the shoulder land region SR is relatively increased. Accordingly, deformation of the shoulder land region SR becomes large. For this reason, in a tire in which the center land region CR has a dense structure in which a plurality of land blocks are densely arranged, it is important to improve the performance of draining water generated from an ice surface in contact with the shoulder land region SR in order to improve the on-ice driving performance of the tire.

In this embodiment, as illustrated in FIGS. 1 and 2, the three-dimensional sipe 50 extending in the tire width direction TW and having one end communicating with the circumferential main groove 20 is formed in the block 40 formed in the shoulder land region SR, and the projection 43 projecting inward in the tire width direction TW is formed on the first groove wall 21 of the circumferential main groove 20 at the corner part 41 of the block 40 where the circumferential main groove 20 and the shoulder lateral groove 30 intersect.

According to this configuration, the three-dimensional sipe 50 absorbs water generated from the ice road surface. The water absorbed by the three-dimensional sipe 50 is drained into the circumferential main groove 20. However, even when the three-dimensional sipe 50 is formed, if the water flow in the circumferential main groove 20 is fast, there is a possibility that the drainage from the three-dimensional sipe 50 to the circumferential main groove 20 may become insufficient. In contrast, in the present embodiment, the projection 43 is formed on the first groove wall 21 of the circumferential main groove 20 in the corner part 41 of the block 40. With this configuration, the water flow in the circumferential main groove 20 is moderated, and the drainability from the three-dimensional sipe 50 to the circumferential main groove 20 is sufficiently secured.

Thus, in the present embodiment, wear resistance and uneven wear resistance can be improved while reducing the rolling resistance of the tire. Further, the on-ice driving performance of the tire can be improved.

In this embodiment, the sipe 50 is a three-dimensional sipe. When the sipe 50 is a three-dimensional sipe, the water absorbing performance of the sipe improves and water generated between the shoulder land region SR and the road surface can be absorbed more quickly.

Further, as illustrated in FIG. 2, in the tire according to the present embodiment, the three-dimensional sipe 50 is not formed in the tire circumferential direction position of the block 40 where the projection 43 is formed. That is, sipes opening to the circumferential main grooves 20 are not formed in the projections 43. According to this configuration, the rigidity of the projection 43 is secured, and the water flow in the circumferential main groove 20 can be moderated more reliably.

In the present embodiment, the recess 25 recessed in the tire width direction TW is formed at the tire circumferential position on the second groove wall 23 of the circumferential direction main groove 20 opposed to the tire circumferential position where the projection 43 is formed on the first groove wall 21. The intersection P between the second groove wall 23 and the extension line of the three-dimensional sipe 50 extending in the tire width direction TW is located in the recess 25, including the end part in the tire circumferential direction TC of the recess 25.

According to this configuration, the water flow in the circumferential main groove 20 can be moderated without reducing an amount of water flowing in the circumferential main groove 20. That is, according to this configuration, the drainage performance can be further improved.

In the present embodiment, a circumferential narrow groove 210 extending in the tire circumferential direction TC is formed in the block 40, and the other end of the three-dimensional sipe 50 communicates with the circumferential narrow groove 210. Since the circumferential narrow groove 210 is formed on the block 40, the block 40 can be deformed in the tire circumferential direction. Therefore, according to the present embodiment, the uneven wear resistance of the tire may be improved. Further, drainage from the other end of the three-dimensional sipe 50 to the shoulder lateral groove 30 is made possible, and drainage performance may be further improved.

In the present embodiment, a groove wall of the shoulder lateral groove 30 at the corner part 41 of the block 40 may be formed in protruding shape protruding in the tire circumferential direction TC, the corner part 43 being a part where the projection 43 is formed. According to this configuration, an intrusion of water from the circumferential main groove 20 into the shoulder lateral groove 30 is suppressed, and the water flow in the shoulder lateral groove 30 drained from the circumferential main groove 20 side to the tread end TE side can be moderated. Thus, drainability from the circumferential narrow groove 210 to the shoulder lateral groove 30 is secured.

Thus, although embodiments of the invention have been described, it should not be understood that the arguments and drawings forming part of this disclosure are intended to limit the invention, but the invention is defined by the appended claims.

### REFERENCE SIGNS LIST

- 10: TREAD SECTION
- 20: CIRCUMFERENTIAL MAIN GROOVE
- 21: FIRST GROOVE WALL OF CIRCUMFERENTIAL MAIN GROOVE
- 23: SECOND GROOVE WALL OF CIRCUMFERENTIAL MAIN GROOVE
- 25: RECESS
- 30: SHOULDER LATERAL GROOVE (LATERAL GROOVE)
- 31: ONE GROOVE WALL FORMING SHOULDER LATERAL GROOVE
- 32: CURVED INCLINED SURFACE
- 33: GROOVE BOTTOM
- 35: TREAD SURFACE
- 40: BLOCK
- 41: CORNER PART
- 43: PROJECTION
- 50: THREE-DIMENSIONAL SIPE (SIPE)
- 210: CIRCUMFERENTIAL NARROW GROOVE
- CL: TIRE EQUATORIAL LINE
- CR: CENTER LAND REGION
- SR: SHOULDER LAND REGION
- θ: INCLINATION ANGLE
- TE: TREAD END
- TA: TIRE AXIAL DIRECTION
- P: INTERSECTION OF EXTENSION LINE OF THREE-DIMENSIONAL SIPE AND SECOND GROOVE WALL

## Claims

1. A tire comprising a tread section (10) including a pair of circumferential main grooves (20) extending in a tire circumferential direction (TC), wherein
the tread section (10) includes: a center land region (CR) partitioned by the pair of circumferential main grooves (20); and a shoulder land region (SR) located outside in a tire width direction (TW) of the center land region (CR) and partitioned by one circumferential main groove (20) of the pair of circumferential main grooves (20) and a tread end (TE),
the center land region (CR) forms a dense structure, in which no main groove extending along the tire circumferential direction is formed and only a circumferential narrow groove (200) extending in the tire circumferential direction and having a groove width narrower than the circumferential main groove (20) is formed in the center land region (CR),
the shoulder land region (SR) includes a block (40) partitioned by a plurality of shoulder lateral grooves (30) crossing the shoulder land region (SR) in the tire width direction (TW),
the block (40) is provided with a sipe (50) extending in the tire width direction (TW) and having one end communicating with the one circumferential main groove (20), and
on a corner part (41) of the block (40) at an intersection of the one circumferential main groove (20) and a first shoulder lateral groove (30) included in the plurality of shoulder lateral grooves (30), a first groove wall (21) of the one circumferential main groove (20) is provided with a projection (43) projecting inward in the tire width direction (TW), wherein
the sipe (50) is not formed at a tire circumferential position of the block (40) where the projection (43) is formed,
at a tire circumferential position on a second groove wall (23) of the one circumferential main groove (20) corresponding to a tire circumferential position where the projection (43) is formed, a recess (25) recessed inward in the tire width direction (TW) is formed,
an intersection (P) between the second groove wall (23) and an extension line of the sipe (50) extending in the tire width direction (TW) is arranged in the recess (25), including an end part in the tire circumferential direction (TC) of the recess (25), and
there is no sipe opening to the one circumferential main groove (20) formed in the projection (43).

2. The tire according to claim 1, wherein a circumferential narrow groove (210) having a groove width narrower than respective groove widths of the pair of circumferential main grooves (20) is formed in the block (40), and
the other end of the sipe (50) communicates with the circumferential narrow groove (210).

3. The tire according to claim 1 or 2, wherein a groove wall of the first shoulder lateral groove (30) at the corner part (41) of the block (40), where the projection (43) is formed, includes a projecting profile protruding in the tire circumferential direction (TC).

4. The tire according to any one of claims 1 to 3, wherein the sipe (50) is a three-dimensional sipe.

## Patentansprüche

1. Reifen, der eine Laufflächensektion (10) umfasst, einschließlich eines Paares von umlaufenden Hauptrillen (20), die sich in einer Reifenumfangsrichtung (TC) erstrecken, wobei
die Laufflächensektion (10) Folgendes einschließt: einen zentralen Landbereich (CR), der durch das Paar von umlaufenden Hauptrillen (20) unterteilt wird; und einen Schulterlandbereich (SR), der außerhalb in einer Reifenbreitenrichtung (TW) des zentralen Landbereichs (CR) angeordnet ist und durch eine umlaufende Hauptrille (20) von dem Paar von umlaufenden Hauptrillen (20) und ein Laufflächenende (TE) unterteilt wird,
der zentrale Landbereich (CR) eine dichte Struktur bildet, in der keine Hauptrille, die sich entlang der Reifenumfangsrichtung erstreckt, geformt ist, und nur eine umlaufende schmale Rille (200), die sich in der Reifenumfangsrichtung erstreckt und eine schmalere Rillenbreite als die umlaufende Hauptrille (20) aufweist, in dem zentralen Landbereich (CR) geformt ist,
der Schulterlandbereich (SR) einen Block (40) einschließt, der durch eine Vielzahl von seitlichen Schulterrillen (30) unterteilt wird, die den Schulterlandbereich (SR) in der Reifenbreitenrichtung (TW) kreuzen,
der Block (40) mit einer Lamelle (50) versehen ist, die sich in der Reifenbreitenrichtung (TW) erstreckt und ein Ende aufweist, das mit der einen umlaufenden Hauptrille (20) verbunden ist, und
auf einem Eckteil (41) des Blocks (40) an einem Schnittpunkt der einen umlaufenden Hauptrille (20) und einer ersten seitlichen Schulterrille (30), die in der Vielzahl von seitlichen Schulterrillen (30) eingeschlossen ist, eine erste Rillenwand (21) der einen umlaufenden Hauptrille (20) mit einem Vorsprung (43) versehen ist, der in der Reifenbreitenrichtung (TW) nach innen vorspringt, wobei
die Lamelle (50) nicht an einer Reifenumfangsposition des Blocks (40) geformt ist, wo der Vorsprung (43) geformt ist,
an einer Reifenumfangsposition auf einer zweiten Rillenwand (23) der einen umlaufenden Hauptrille (20), die einer Reifenumfangsposition entspricht, wo der Vorsprung (43) geformt ist, eine Ausnehmung (25) geformt ist, die in der Reifenbreitenrichtung (TW) nach innen ausgenommen ist,
ein Schnittpunkt (P) zwischen der zweiten Rillenwand (23) und einer Verlängerungslinie der Lamelle (50), die sich in der Reifenbreitenrichtung (TW) erstreckt, in der Ausnehmung (25) angeordnet ist, einschließlich eines Endteils der Ausnehmung (25) in der Reifenumfangsrichtung (TC), und
es keine Lamellenöffnung zu der einen umlaufenden Hauptrille (20) gibt, die in dem Vorsprung (43) geformt ist.

2. Reifen nach Anspruch 1, wobei eine umlaufende schmale Rille (210), die eine schmalere Rillenbreite als die jeweiligen Rillenbreiten des Paares von umlaufenden Hauptrillen (20) aufweist, in dem Block (40) geformt ist, und
das andere Ende der Lamelle (50) mit der umlaufenden schmalen Rille (210) verbunden ist.

3. Reifen nach Anspruch 1 oder 2, wobei eine Rillenwand der ersten seitlichen Schulterrille (30) an dem Eckteil (41) des Blocks (40), wo der Vorsprung (43) geformt ist, ein Vorsprungsprofil einschließt, das in der Reifenumfangsrichtung (TC) vorspringt.

4. Reifen nach einem der Ansprüche 1 bis 3, wobei die Lamelle (50) eine dreidimensionale Lamelle ist.

## Revendications

1. Pneumatique, comprenant une section de bande de roulement (10) incluant une paire de rainures circonférentielles principales (20) s'étendant dans une direction circonférentielle du pneumatique (TC), dans lequel
la section de bande de roulement (10) inclut : une région en relief centrale (CR) divisée par la paire de rainures circonférentielles principales (20) ; et une région en relief d'épaulement (SR) disposée à l'extérieur, dans une direction de la largeur du pneumatique (TW), de la région en relief centrale (CR) et divisée par une rainure circonférentielle principale (20) de la paire de rainures circonférentielles principales (20) et une extrémité de la bande de roulement (TE),
la région en relief centrale (CR) forme une structure dense, dans laquelle aucune rainure principale s'étendant le long de la direction circonférentielle du pneumatique n'est formée, et uniquement une rainure circonférentielle étroite (200) s'étendant dans la direction circonférentielle du pneumatique et ayant une largeur de rainure plus étroite que la rainure circonférentielle principale (20) est formée dans la région en relief centrale (CR),
la région en relief d'épaulement (SR) inclut un bloc (40) divisé par une pluralité de rainures latérales d'épaulement (30) croisant la région en relief d'épaulement (SR) dans la direction de la largeur du pneumatique (TW),
le bloc (40) est pourvue d'une lamelle (50) s'étendant dans la direction de la largeur du pneumatique (TW) et comportant une extrémité communiquant avec ladite une rainure circonférentielle principale (20), et
sur une partie de coin (41) du bloc (40), au niveau d'une intersection de ladite une rainure circonférentielle principale (20) et d'une première rainure latérale d'épaulement (30), incluse dans la pluralité de rainures latérales d'épaulement (30), une première paroi de rainure (21) de ladite une rainure circonférentielle principale (20) est pourvue d'une saillie (43) faisant saillie vers l'intérieur dans la direction de la largeur du pneumatique (TW), dans lequel
la lamelle (50) n'est pas formée au niveau d'une position circonférentielle du pneumatique du bloc (40) où est formée la saillie (43),
au niveau d'une position circonférentielle du pneumatique, sur une deuxième paroi de rainure (23) de ladite une rainure circonférentielle principale (20) correspondant à une position circonférentielle du pneumatique, où est formée la saillie (43), est formé un évidement (25) évidé vers l'intérieur, dans la direction de la largeur du pneumatique (TW),
une intersection (P) entre la deuxième paroi de rainure (23) et une ligne d'extension de la lamelle (50) s'étendant dans la direction de la largeur du pneumatique (TW) est agencée dans l'évidement (25), incluant une partie d'extrémité de l'évidement (25) dans la direction circonférentielle du pneumatique (TC), et
il n'existe pas d'ouverture de lamelle vers ladite une rainure circonférentielle principale (20) formée dans la saillie (43).

2. Pneumatique selon la revendication 1, dans lequel une rainure circonférentielle étroite (210) ayant une largeur de rainure plus étroite que les largeurs de rainure respectives de la paire de rainures circonférentielles principales (20) est formée dans le bloc (40), et
l'autre extrémité de la lamelle (50) communique avec la rainure circonférentielle étroite (210).

3. Pneumatique selon la revendication 1 ou 2, dans lequel une paroi de rainure de la première rainure latérale d'épaulement (30), au niveau de la partie de coin (41) du bloc (40), où est formée la saillie (43), inclut un profil de saillie faisant saillie dans la direction circonférentielle du pneumatique (TC).

4. Pneumatique selon l'une quelconque des revendications 1 à 3, dans lequel la lamelle (50) est une lamelle tridimensionnelle.
